(19) Europäisches Patentamt / European Patent Office / Office européen des brevets

(11) **EP 4 664 410 A1**

(12) **EUROPEAN PATENT APPLICATION**
published in accordance with Art. 153(4) EPC

(43) Date of publication:
**17.12.2025   Bulletin 2025/51**

(21) Application number: **24857766.0**

(22) Date of filing: **08.04.2024**

(51) International Patent Classification (IPC):
**G06T 15/20** (2011.01)

(52) Cooperative Patent Classification (CPC):
**G06T 1/20; G06T 15/00; G06T 15/20**

(86) International application number:
**PCT/CN2024/086637**

(87) International publication number:
**WO 2025/044216 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **29.08.2023   CN 202311114943**
**01.09.2023   CN 202311131841**

(71) Applicant: **Huawei Technologies Co., Ltd.**
**Shenzhen, Guangdong 518129 (CN)**

(72) Inventors:
• **WANG, Shu**
  **Shenzhen, Guangdong 518129 (CN)**
• **FENG, Shaobo**
  **Shenzhen, Guangdong 518129 (CN)**
• **LI, Jun**
  **Shenzhen, Guangdong 518129 (CN)**
• **ZHENG, Tianji**
  **Shenzhen, Guangdong 518129 (CN)**

(74) Representative: **Grünecker Patent- und Rechtsanwälte**
**PartG mbB**
**Leopoldstraße 4**
**80802 München (DE)**

(54) **RENDERING PROCESSING METHOD AND RENDERING DEVICE**

(57)    This application discloses a rendering processing method and a rendering device, and relates to the field of image processing technologies, reducing heat generated by a terminal device and reducing power consumption. The rendering processing method includes: first, intercepting a first rendering instruction that is sent by a target application and that is used to render a to-be-rendered image of the target application; then, obtaining a second rendering instruction that is used to render a previous frame of image of the to-be-rendered image; then, determining field of view transformation information of the to-be-rendered image relative to the previous frame of image based on the first rendering instruction and the second rendering instruction; when the field of view transformation information meets a preset dynamic scene, adjusting an original resolution parameter of at least one render pass in the first rendering instruction to a lower preset resolution parameter; and finally, sending the adjusted first rendering instruction, to render the to-be-rendered image.

EP 4 664 410 A1

Rendering device

Processor | Graphics processing unit

S310: Intercept a first rendering instruction sent by a target application

S320: Obtain a second rendering instruction

S330: Determine field of view transformation information of a to-be-rendered image relative to a previous frame of image based on the first rendering instruction and the second rendering instruction

S340: When the field of view transformation information meets a preset dynamic scene, adjust an original resolution parameter of at least one render pass in the first rendering instruction to a preset resolution parameter

S350: Send the adjusted first rendering instruction

FIG. 3

**Description**

This application claims priorities to Chinese Patent Application No. 202311114943.2, filed with the China National Intellectual Property Administration on August 29, 2023 and entitled "RENDERING PROCESSING METHOD AND APPARATUS", and to Chinese Patent Application No. 202311131841.1, filed with the China National Intellectual Property Administration on September 1, 2023 and entitled "RENDERING PROCESSING METHOD AND RENDERING DEVICE", both of which are incorporated herein by reference in their entireties.

**TECHNICAL FIELD**

This application relates to the field of image processing technologies, and in particular, to a rendering processing method and a rendering device.

**BACKGROUND**

As users have an increasingly high requirement for visual effect of an application, image resolution of the application also becomes increasingly high. The image resolution of the application depends on how an image is rendered. Specifically, in a process of rendering a scene, a central processing unit (central processing unit, CPU) of a terminal device usually sends rendering data to a graphics processing unit (graphics processing unit, GPU), so that the GPU renders the image based on the rendering data. Because a dynamic scene generally includes a large quantity of sequence frame images, and the GPU needs to render each frame of image of the dynamic scene, it is quite time-consuming. In addition, for higher image resolution of the application, the GPU needs to render each frame of image in more detail, which means that the GPU needs to bear a large amount of computation.

In conclusion, when a high-quality image of the application is rendered, GPU load is high. As a result, the terminal device generates heat and consumes power fast.

**SUMMARY**

This application provides a rendering processing method and a rendering device, to reduce heat generated by a terminal device and reduce power consumption.

To achieve the foregoing objectives, this application uses the following technical solutions.

According to a first aspect, a rendering processing method is provided. The method includes: first, intercepting a first rendering instruction that is sent by a target application and that is used to render a to-be-rendered image of the target application; then, obtaining a second rendering instruction that is used to render a previous frame of image of the to-be-rendered image; then, determining field of view transformation information of the to-be-rendered image relative to the previous frame of image based on the first rendering instruction and the second rendering instruction; when the field of view transformation information meets a preset dynamic scene, adjusting an original resolution parameter of at least one render pass in the first rendering instruction to a lower preset resolution parameter; and finally, sending the adjusted first rendering instruction, to render the to-be-rendered image.

According to the first aspect, a first rendering instruction that is sent by the target application and that instructs high resolution is intercepted, and when the field of view transformation information meets the preset dynamic scene, an original resolution parameter of a part of render passes in the first rendering instruction is lowered and then sent to a graphics processing unit for rendering. This reduces an amount of rendering computation when relatively ensuring rendering quality, further improves rendering efficiency to improve a frame rate of the target application, reduces heat generated by a terminal device, and reduces power consumption.

In a possible implementation, the method further includes: when the field of view transformation information meets a preset static scene, generating a third rendering instruction, where the third rendering instruction includes a first sub-instruction and a second sub-instruction, where specifically, the first sub-instruction instructs to use a rendering result of at least one render pass of the previous frame of image as a first rendering result of the to-be-rendered image, and the second sub-instruction includes an original resolution parameter of another render pass other than the at least one render pass in the first rendering instruction; and sending the third rendering instruction that is used to render the to-be-rendered image.

In this implementation, when the field of view transformation information meets the preset static scene, the third rendering instruction that instructs to reuse rendering results of a part of render passes of the previous frame of image as a rendering result of the to-be-rendered image is generated. This reduces a required amount of rendering computation.

In a possible implementation, adjusting the original resolution parameter of the at least one render pass in the first rendering instruction to the preset resolution parameter includes: determining a plurality of render passes in the first rendering instruction, and specification parameters of the plurality of render passes, where the specification parameter includes at least one of the following: render pass size, framebuffer attachment, and quantity of draw calls; and adjusting an original resolution parameter of a target render pass in the plurality of render passes to the preset resolution parameter, where a specification parameter of the target render pass meets a preset specification condition.

In this implementation, only the original resolution parameter of the target render pass is adjusted to the preset resolution parameter. During rendering based on the adjusted first rendering instruction, this reduces an amount of rendering computation when relatively ensuring rendering quality, further improves rendering efficiency to improve a frame rate of the target application, reduces heat generated by a terminal device, and reduces power consumption.

In a possible implementation, the field of view transformation information of different sizes corresponds to the different preset dynamic scenes; and the preset resolution parameters in the different preset dynamic scenes are different, or the preset resolution parameters in the different preset dynamic scenes are the same.

In this implementation, the preset resolution parameters in the different preset dynamic scenes are flexibly defined.

In a possible implementation, the field of view transformation information includes displacement transformation information and angle transformation information; the first rendering instruction includes a first field of view matrix and first coordinates, and the second rendering instruction includes a second field of view matrix and second coordinates; and determining the field of view transformation information of the to-be-rendered image relative to the previous frame of image based on the first rendering instruction and the second rendering instruction includes: calculating a difference of the first coordinates relative to the second coordinates, and outputting the displacement transformation information; calculating a first plane normal vector based on the first field of view matrix, and calculating a second plane normal vector based on the second field of view matrix; and calculating an included angle of the first plane normal vector relative to the second plane normal vector, and outputting the angle transformation information.

In this implementation, the field of view transformation information can be accurately calculated, and whether a transformed scene of a camera is the preset dynamic scene or the preset static scene can be further determined based on the field of view transformation information, so that different rendering instruction adjustment strategies are performed based on the different scenes.

According to a second aspect, a rendering processing method is provided. The method includes: receiving a third rendering instruction, where the third rendering instruction includes a first sub-instruction and a second sub-instruction, the first sub-instruction instructs to use a rendering result of at least one render pass of a previous frame of image of a to-be-rendered image of a target application as a first rendering result of the to-be-rendered image, the second sub-instruction includes an original resolution parameter of another render pass other than the at least one render pass in a first rendering instruction, and the first rendering instruction is an instruction sent by the target application and used to render the to-be-rendered image; and rendering the to-be-rendered image based on the third rendering instruction to obtain a full rendering result of the to-be-rendered image, where the full rendering result includes the first rendering result and a second rendering result, and the second rendering result is obtained by rendering the to-be-rendered image by using the another render pass based on the original resolution parameter.

According to the second aspect, the to-be-rendered image is rendered based on the third rendering instruction. A render pass corresponding to a reused rendering result does not need to be rendered again. Therefore, this reduces an amount of rendering computation, improves rendering quality, improves a frame rate of the target application, reduces heat generated by a terminal device, and reduces power consumption.

According to a third aspect, a rendering processing apparatus is provided. The rendering processing apparatus includes: an interception module, configured to intercept a first rendering instruction sent by a target application, where the first rendering instruction is used to render a to-be-rendered image of the target application; an obtaining module, configured to obtain a second rendering instruction, where the second rendering instruction is used to render a previous frame of image of the to-be-rendered image; a determining module, configured to determine field of view transformation information of the to-be-rendered image relative to the previous frame of image based on the first rendering instruction and the second rendering instruction; an adjustment module, configured to: when the field of view transformation information meets a preset dynamic scene, adjust an original resolution parameter of at least one render pass in the first rendering instruction to a preset resolution parameter, where the preset resolution parameter is lower than the original resolution parameter; and a sending module, configured to send the adjusted first rendering instruction, where the adjusted first rendering instruction is used to render the to-be-rendered image.

In a possible implementation, the apparatus further includes: a generation module, configured to: when the field of view transformation information meets a preset static scene, generate a third rendering instruction, where the third rendering instruction includes a first sub-instruction and a second sub-instruction, the first sub-instruction instructs to use rendering results of a part of render passes of the previous frame of image as a part of a rendering result of the to-be-rendered image, and the second sub-instruction includes an original resolution parameter of another render pass other than the part of render passes in the first rendering instruction; and the sending module is further configured to send the third rendering instruction, where the third rendering instruction is used to render the to-be-rendered image.

In a possible implementation, the adjustment module is specifically configured to: determine a plurality of render passes in the first rendering instruction, and specification parameters of the plurality of render passes; and adjust an original resolution parameter of a target render pass in the plurality of render passes to the preset resolution parameter, where the specification parameter includes at least one of the following: render pass size, framebuffer attachment, and quantity of draw calls; and a specification parameter of the target render pass meets a preset specification condition.

In a possible implementation, the field of view transformation information of different sizes corresponds to the different preset dynamic scenes; and the preset resolution parameters in the different preset dynamic scenes are different, or the preset resolution parameters in the different preset dynamic scenes are the same.

In a possible implementation, the field of view transformation information includes displacement transformation information and angle transformation information; the first rendering instruction includes a first field of view matrix and first coordinates, and the second rendering instruction includes a second field of view matrix and second coordinates; and the determining module is specifically configured to: calculate a difference of the first coordinates relative to the second coordinates, and output the displacement transformation information; calculate a first plane normal vector based on the first field of view matrix, and calculate a second plane normal vector based on the second field of view matrix; and calculate an included angle of the first plane normal vector relative to the second plane normal vector, and output the angle transformation information.

According to a fourth aspect, a rendering processing apparatus is provided. The rendering processing apparatus includes: a receiving module, configured to receive a third rendering instruction, where the third rendering instruction includes a first sub-instruction and a second sub-instruction, the first sub-instruction instructs to use a rendering result of at least one render pass of a previous frame of image of a to-be-rendered image of a target application as a first rendering result of the to-be-rendered image, the second sub-instruction includes an original resolution parameter of another render pass other than the at least one render pass in a first rendering instruction, and the first rendering instruction is an instruction sent by the target application and used to render the to-be-rendered image; and a rendering module, configured to render the to-be-rendered image based on the third rendering instruction to obtain a full rendering result of the to-be-rendered image, where the full rendering result includes the first rendering result and a second rendering result, and the second rendering result is obtained by rendering the to-be-rendered image by using the another render pass based on the original resolution parameter.

According to a fifth aspect, this application provides a rendering device. The rendering device includes a processor and a transceiver. The processor and the transceiver are configured to support the rendering device to perform the method according to the first aspect or the second aspect. Further, the rendering device may further include a memory. The memory stores computer instructions, and the processor may run the computer instructions to perform the method according to the first aspect or the second aspect.

According to a sixth aspect, this application provides a computer-readable storage medium. The computer-readable storage medium stores computer instructions. When the computer instructions are run, the method according to the first aspect or the second aspect is performed.

According to a seventh aspect, this application provides a computer program product including instructions. When the computer program product runs on a computer, the computer is enabled to perform the method according to the first aspect or the second aspect.

According to an eighth aspect, this application provides a chip. The chip includes a processor and a transceiver. The processor and the transceiver are configured to support a rendering processing apparatus to perform the method according to the first aspect or the second aspect.

For beneficial effects of the third aspect to the sixth aspect of this application, correspondingly refer to analysis of beneficial effects of the first aspect or the second aspect. Details are not described herein again.

**BRIEF DESCRIPTION OF DRAWINGS**

FIG. 1 is a diagram of a structure of a rendering device according to an embodiment of this application;
FIG. 2 is a diagram of an architecture of a rendering system according to an embodiment of this application;
FIG. 3 is a schematic flowchart of a rendering processing method according to an embodiment of this application;
FIG. 4 is a schematic flowchart of another rendering processing method according to an embodiment of this application;
FIG. 5 is a schematic flowchart of another rendering processing method according to an embodiment of this application;
FIG. 6 is a diagram of a render pass according to an embodiment of this application;
FIG. 7 is a schematic flowchart of another rendering processing method according to an embodiment of this application;
FIG. 8 is a diagram of a structure of a rendering processing apparatus according to an embodiment of this application;

and
FIG. 9 is a schematic of a structure of another rendering processing apparatus according to an embodiment of this application.

## DESCRIPTION OF EMBODIMENTS

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

It should be noted that, in the specification, claims, and accompanying drawings of this application, the terms "first", "second", and the like are intended to distinguish between different objects but do not indicate a particular order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that, in embodiments of this application, "at least one (item)" means one or more, "plurality of" means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural. It should be understood that in embodiments of this application, "B corresponding to A" indicates that B is associated with A. For example, B may be determined based on A. It should be further understood that determining B based on A does not mean that B is determined based only on A. B may alternatively be determined based on A and/or other information.

Before embodiments of this application are described, some terms in embodiments of this application are explained.

GPU: also referred to as a display core, a visual processor, or a display chip, is a microprocessor that is specially used to perform image and graphics-related computation on a personal computer, a workstation, a game console, and some mobile devices (such as a tablet computer and a smartphone).

Model view projection matrix (Model View Projection Matrix, MVP Matrix): may be briefly referred to as an MVP matrix. Specifically, the MVP matrix is a combination of three matrices: a model (Model) matrix, a view (View) matrix, and a projection (Projection) matrix. The model matrix is used to transform an object from a local coordinate system to a world coordinate system, the view matrix is used to transform the object from the world coordinate system to a camera coordinate system, and the projection matrix is used to transform the object from the camera coordinate system to a clip coordinate system.

Draw call (Draw Call): A draw call means a process in which a CPU sends a drawing instruction to a GPU. In Unity®, to draw an object, the CPU needs to send a draw call to the GPU. A larger quantity of draw calls indicates higher load of the CPU and the GPU, consequently affecting performance of a terminal device.

Render pass (Pass): briefly referred to as a pass, is an important component of a rendering pipeline. Each detail seen in a final rendering frame (also referred to as a rendering result) is calculated by using a series of passes. The pass can generate textures (textures), buffers (buffers), and render targets (render targets) required by the image. Each image generated by the pass contains specific information about a scene, for example, color (color) information, normal (normal) information, and depth (depth) information. Such image information is combined to produce more complex effect, such as shadows (shadows), lighting (lighting), blur (blur), glow (glow), and other post-processing (post-processing) effect. The pass is a rendering working logic group that defines an input (input) slot and an output (output) slot. The pass receives, through the input slot, input data passed to the pass, calculates the data, then generates output data, and transmits the output data to another pass through the output slot.

In an embodiment, the pass may be a render pass (render pass), and a rendering instruction of an application includes a group of associated render passes.

Camera: may be referred to as a virtual camera, and is similar to a real camera. A camera component in Unity® is responsible for shooting a game image and projecting the game image onto an image. The image shot by the camera determines an image on a game panel. During scene creation, Unity® creates a camera by default. Therefore, an image is displayed only after a user taps the game panel. A camera in a game application is usually mobile. For example, in a first person game, a camera always moves along with an operation. Specifically, coordinates of the camera may correspond to a specific point in a world coordinate system. A visual range determined by the camera determines an image range of a game. In embodiments of this application, the camera is also referred to as a field of view.

To meet an increasing use requirement of a user for image quality of applications, the applications such as game, film, and design are increasingly developing toward high resolution and high frame rates. However, higher image resolution requires a larger amount of computation of a GPU. As a result, a terminal device generates heat and consumes power fast.

To resolve the foregoing technical problem, an embodiment of this application provides a rendering processing method. The following describes the method provided in this embodiment of this application with reference to the accompanying drawings of this specification.

The communication method provided in this embodiment of this application may be applied to a rendering device. For example, the rendering device may be a terminal device (terminal equipment), and the terminal device may be user equipment (user equipment, UE), a mobile station (mobile station, MS), a mobile terminal (mobile terminal, MT), or the like. Specifically, the terminal device may be a mobile phone (mobile phone), a tablet computer, or a computer with a wireless transceiver function, or may be a virtual reality (virtual reality, VR) terminal, an augmented reality (augmented reality, AR) terminal, or the like. In embodiments of this application, an apparatus configured to implement a function of the terminal device may be a terminal, or may be an apparatus that can support the terminal to implement the function, for example, a chip system. The apparatus may be installed on the terminal device, or may be used in combination with the terminal device.

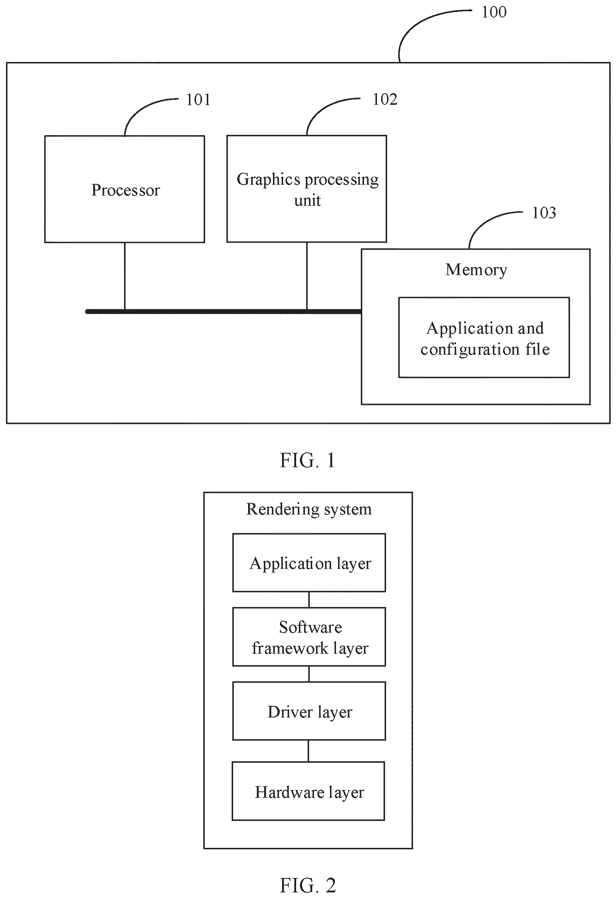

For example, an embodiment of this application provides a rendering device 100. A structure of the rendering device 100 is shown in FIG. 1. The rendering device 100 includes a processor 101, a graphics processing unit 102, and a memory 103.

The processor 101 may be a CPU. The processor 101 may alternatively be a chip like another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component, or a combination of the foregoing chips.

The processor 101 is configured to: generate a first rendering instruction according to a render request of an application, adjust the first rendering instruction by using a rendering processing method in an embodiment of this application, convert the adjusted rendering instruction into hardware code, and send the hardware code to the graphics processing unit 102 for execution.

The graphics processing unit 102 is configured to obtain an image of the application through rendering by executing the hardware code corresponding to the rendering instruction.

The memory 103 may be a volatile memory (volatile memory), for example, a random-access memory (random-access memory, RAM); or a non-volatile memory (non-volatile memory), for example, a read-only memory (read-only memory, ROM), a flash memory (flash memory), a hard disk drive (hard disk drive, HDD), or a solid-state disk (solid-state drive, SSD); or a combination of the foregoing memories, and is configured to store a rendering instruction, a rendering resource, a shader parameter, a rendering status, an application, a configuration file, data information, or other content that can be used to implement the method in this application.

An embodiment of this application further provides a rendering system. The rendering system may be deployed on the rendering device shown in FIG. 1. As shown in FIG. 2, a rendering system shown in FIG. 2 includes an application layer, a software framework layer, a driver layer, and a hardware layer.

Specifically, the application layer, the software framework layer, and the driver layer may run on the processor 101 of the rendering device 100, and the hardware layer may run on the graphics processing unit 102 of the rendering device 100.

The application layer mainly carries a graphics rendering program. The graphics rendering program includes a game, a graphics application (application, APP), a display user interface (user interface, UI), a camera (Camera), a virtual reality/augmented reality (virtual reality/augmented reality, VR/AR) technology, and the like. The graphics rendering program at the application layer may be run on a CPU, receive a render request sent by a user, call a target application according to the render request, to generate the first rendering instruction, and send the generated first rendering instruction to the software framework layer.

The software framework layer mainly carries a rendering engine. The rendering engine includes a game engine (Unity®), an unreal engine (Unreal Engine), a graphics display system (Android® HWUI), a game development engine (Cocos), and the like. The software framework layer may run on the CPU, receive the first rendering instruction of the application layer, perform a rendering processing method in an embodiment of this application based on the first rendering instruction, to obtain the adjusted first rendering instruction, and improve the adjusted first rendering instruction based on a rendering engine.

The driver layer mainly carries a graphics driver. The driver layer may run on the CPU, convert the adjusted first rendering instruction into the hardware code, and send the hardware code to the hardware layer.

The hardware layer mainly carries graphics hardware. For example, the hardware may be a GPU. The hardware layer may run on the GPU, and execute hardware code corresponding to the adjusted first rendering instruction to render the image of the application.

For example, when the user runs a game application on a mobile phone, a specific scene is rendered based on a specific operation of the user. In response to the operation of the user, the game application at the application layer running on the CPU generates a render request, and preliminarily generates the first rendering instruction. Further, the game engine at the software framework layer running on the CPU adjusts the rendering instruction. Then, a driver at the driver layer running on the CPU converts the adjusted rendering instruction into hardware code and sends the hardware code to the hardware layer. The hardware layer may run the hardware code on the GPU, to render the image of the application.

Specifically, a process in which the software framework layer in the rendering system performs a rendering processing method in an embodiment of this application is described in detail in the following method content. Details are not described herein again.

It should be noted that the rendering device shown in FIG. 1 and the rendering system shown in FIG. 2 are merely examples for describing an application scenario of the solutions in this application, and are not intended to limit the application scenario of the solutions in this application.

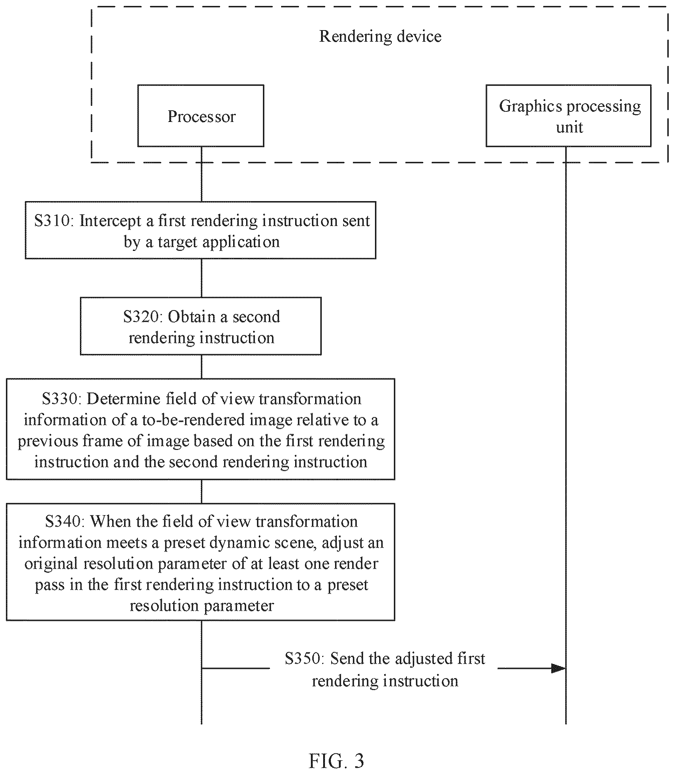

Based on the foregoing rendering device described in this embodiment of this application, an embodiment of this application provides a rendering processing method. FIG. 3 is a schematic flowchart of a rendering processing method according to an embodiment of this application. As shown in FIG. 3, the method may include the following steps.

S310: A processor intercepts a first rendering instruction sent by a target application.

When processing rendering instructions sent by various applications, the processor may determine, based on application information, whether an application is the target application. When determining that a rendering instruction is sent by the target application, the processor may intercept the rendering instruction. The target application is a type of application that has a high-resolution requirement. For example, the target application may be a game application, a VR application, or an AR application. Due to the high-resolution requirement of the target application, if a to-be-rendered image is rendered based on the first rendering instruction generated by the target application, an obtained rendering result also has high resolution, and a rendering process also imposes high load on a graphics processing unit.

Refer to the description of the application layer in the rendering system provided in embodiments of this application. The application layer receives a render request sent by a user, calls the target application according to the render request, to generate the first rendering instruction, and sends the generated first rendering instruction to a software framework layer. The software framework layer usually directly improves the first rendering instruction. However, in this embodiment of this application, after the first rendering instruction is intercepted and adjusted, a rendering engine at the software framework layer improves the adjusted first rendering instruction. In other words, after intercepting the first rendering instruction, a terminal device cannot perform rendering based on the first rendering instruction.

For example, a Harmony® operating system is installed on the terminal device. The first rendering instruction may be intercepted through reserved interfaces of OpenGL and Vulkan in the Harmony® operating system. Before the software framework layer calls a driver layer, the first rendering instruction is intercepted and buffered as an instruction stream.

S320: The processor obtains a second rendering instruction.

The second rendering instruction is used to render a previous frame of image of the to-be-rendered image. In a rendering scene of the target application, an image is rendered frame by frame. During rendering of the to-be-rendered image, rendering of the previous frame of image is completed, and rendering of the previous frame of image is also triggered by a rendering instruction (namely, the second rendering instruction) generated by the target application. The second rendering instruction is usually stored as historical data in a buffer, and the second rendering instruction may be obtained from the buffer.

S330: The processor determines field of view transformation information of the to-be-rendered image relative to the previous frame of image based on the first rendering instruction and the second rendering instruction.

The first rendering instruction and the second rendering instruction respectively record field of view information of the to-be-rendered image and field of view information of the previous frame of image. The field of view transformation information between the to-be-rendered image and the previous frame of image may be determined by comparing the two groups of field of view information.

S340: When the field of view transformation information meets a preset dynamic scene, the processor adjusts an original resolution parameter of at least one render pass in the first rendering instruction to a preset resolution parameter.

The field of view transformation information of different sizes corresponds to the different preset dynamic scenes; and the preset resolution parameters in the different preset dynamic scenes may be different or the same. The preset dynamic scene may be a scene in which the field of view transformation information represents a larger field of view transformation degree of the to-be-rendered image relative to the previous frame of image. For example, if the target application is a game application, the preset dynamic scene may be a scene in the game, for example, character walking, character running, or user field of view rotation. In this case, the original resolution parameter of the at least one render pass in the first rendering instruction is lowered (that is, adjusted to the preset resolution parameter), to reduce an amount of rendering computation.

S350: The processor sends the adjusted first rendering instruction to the graphics processing unit, and correspondingly, the graphics processing unit receives the adjusted first rendering instruction.

The processor sends the adjusted first rendering instruction to the graphics processing unit, so that the graphics processing unit renders the to-be-rendered image based on the adjusted first rendering instruction.

In this embodiment of this application, a first rendering instruction that is sent by the target application and that instructs high resolution is intercepted, and when the field of view transformation information meets the preset dynamic scene, an original resolution parameter of a part of render passes in the first rendering instruction is lowered and then sent to a graphics processing unit for rendering. This reduces an amount of rendering computation when relatively ensuring rendering quality, further improves rendering efficiency to improve a frame rate of the target application, reduces heat generated by the terminal device, and reduces power consumption.

In addition, it is not necessary for an application and an application engine to perform code adaptation, and no specific hardware platform needs to be relied on. Based on a context transmission characteristic of a rendering instruction in a form of a data stream, a field of view transformation scene between two frames, namely, a previous frame and a next frame, is determined, and resolution of a render pass is accordingly adjusted, to reduce load of the target application and improve a frame rate of the target application. In this way, the target application can reduce power consumption of the terminal device without being perceived by the user, delay time at which a system limits a frequency and the frame rate of the target application, extend running time of the target application, and improve user experience.

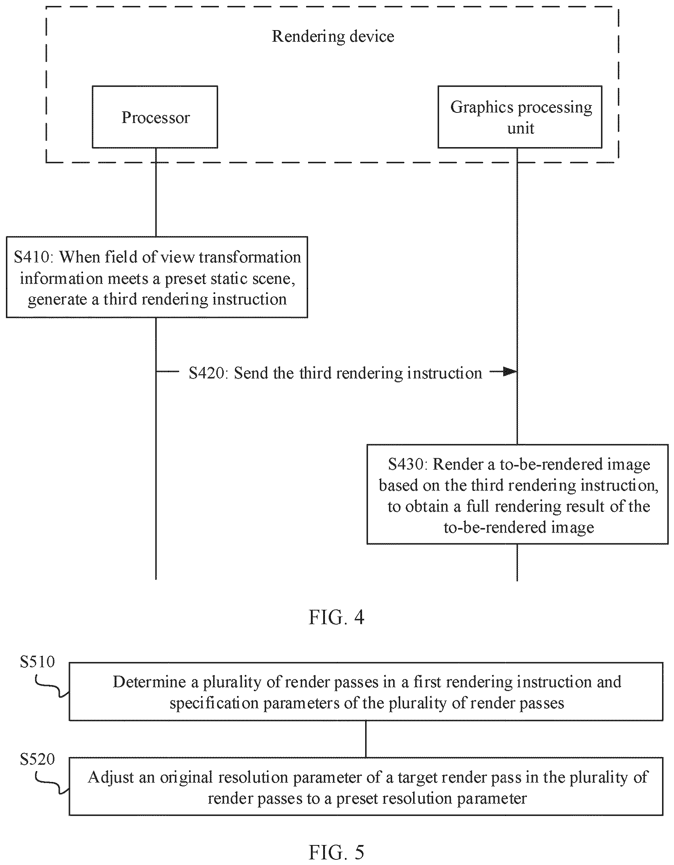

In an embodiment, as shown in FIG. 4, the method may further include the following steps.

S410: When field of view transformation information meets a preset static scene, a processor generates a third rendering instruction.

The preset static scene may be a scene in which the field of view transformation information represents a smaller field of view transformation degree of the to-be-rendered image relative to the previous frame of image. For example, if a target application is a game application, the preset static scene may be a scene in which a camera is static in a game. In this case, image quality of the target application can still be ensured by reusing rendering results of a part of render passes of the previous frame of image as a rendering result of the to-be-rendered image. In this case, the third rendering instruction is generated. The third rendering instruction includes a first sub-instruction and a second sub-instruction. The first sub-instruction instructs to use a rendering result of at least one render pass of the previous frame of image as a first rendering result of the to-be-rendered image. The second sub-instruction includes an original resolution parameter of another render pass other than the at least one render pass in the first rendering instruction.

In another example, if a user does not perform any operation on a game character and a game UI, rendering results of all render passes of the previous frame of image may be reused. In this case, the first sub-instruction instructs to use the rendering results of all the render passes of the previous frame of image as the first rendering result of the to-be-rendered image. In this case, the second sub-instruction does not exist, that is, the third rendering instruction includes the first sub-instruction. In this case, the third rendering instruction simply instructs to reuse the rendering result, and no specific rendering needs to be performed.

S420: The processor sends the third rendering instruction to a graphics processing unit. Correspondingly, the graphics processing unit receives the third rendering instruction.

S430: The graphics processing unit renders the to-be-rendered image based on the third rendering instruction, to obtain a full rendering result of the to-be-rendered image.

When the graphics processor renders the to-be-rendered image based on the third rendering instruction, there are two rendering processes. One process is using the rendering result of the at least one render pass of the previous frame of image of the to-be-rendered image as the first rendering result of the to-be-rendered image. The other process is that the another render pass renders the to-be-rendered image based on the original resolution parameter, to obtain a second rendering result, and finally obtain the full rendering result.

In this embodiment of this application, when the field of view transformation information meets the preset static scene, the third rendering instruction that instructs to reuse the rendering results of the part of render passes of the previous frame of image as the rendering result of the to-be-rendered image is generated, and the to-be-rendered image is rendered based on the third rendering instruction. A render pass corresponding to a reused rendering result does not need to be rendered again. Therefore, this reduces an amount of rendering computation, improves rendering quality, improves a frame rate of the target application, reduces heat generated by a terminal device, and reduces power consumption.

In a possible implementation, as shown in FIG. 5, S340 (adjusting the original resolution parameter of the at least one render pass in the first rendering instruction to the preset resolution parameter) may include the following steps.

S510: Determine a plurality of render passes in the first rendering instruction and specification parameters of the plurality of render passes.

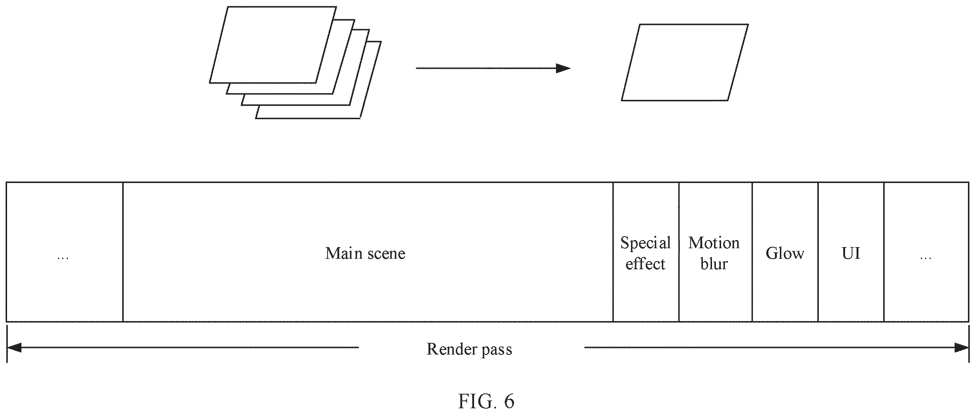

Refer to the descriptions of the render pass in embodiments of this application. Each detail seen in a final rendering frame is calculated by using a series of passes. For example, as shown in FIG. 6, the render pass may include: a main scene render pass, a special effect render pass, a UI render pass, a motion blur render pass, a glow render pass, and the like. The first rendering instruction includes the specification parameter of a plurality of render passes, and different render passes are responsible for rendering different parts of an image. For example, a render pass A is responsible for rendering a main scene, a render pass B is responsible for rendering special effect, and a render pass C is responsible for rendering a UI. The specification parameter includes at least one of the following: render pass size (Size), framebuffer attachment (framebuffer attachment), and quantity of draw calls (Draw Calls). Based on the specification parameter of the render passes, specific parts of the image that are rendered by the render passes can be distinguished.

S520: Adjust an original resolution parameter of a target render pass in the plurality of render passes to the preset resolution parameter.

A specification parameter of the target render pass meets a preset specification condition. The preset specifications can be flexibly set to ensure image quality and terminal performance improvement. If there are too many render passes with reduced resolution parameters, although terminal performance is improved, image quality is poor, and a user may perceive the poor image quality, reducing user experience. Reducing the render pass for rendering a main scene can balance the image quality and the terminal performance improvement. The target render pass determined based on the preset specification condition should be capable of balancing between the image quality and the terminal performance improvement.

For example, the target render pass determined based on the preset specification condition may be the render pass for rendering a main scene. In this case, the preset specification condition is that a size of the target render pass needs to be greater than a specific threshold, the framebuffer attachment needs to include three attachments: color, depth, and stencil, and there is a largest quantity of draw calls in the plurality of render passes. Adjusting only an original resolution parameter of the render pass for rendering a main scene to the preset resolution parameter can greatly reduce an amount of rendering computation when slightly reducing rendering quality.

In another example, the target render pass determined based on the preset specification condition may be the render pass for rendering a main scene and an associated render pass (the associated render pass and the render pass for rendering a main scene share a depth texture). Adjusting only original resolution parameters of the render pass for rendering a main scene and the associated render pass to preset resolution parameters can greatly reduce an amount of rendering computation when slightly reducing rendering quality.

In an embodiment, the specification parameter of the render pass may be further applied to generation of the third rendering instruction in S410. The third rendering instruction includes a first sub-instruction and a second sub-instruction. The first sub-instruction instructs to use a rendering result of at least one render pass of the previous frame of image as a first rendering result of the to-be-rendered image. The second sub-instruction includes an original resolution parameter of another render pass other than the at least one render pass in the first rendering instruction. Specifically, the specification parameter of the render pass may be used to differentiate specific render passes that are respectively instructed by the first sub-instruction and the second sub-instruction. For example, the main scene render pass and another render pass other than the main scene render pass are determined by using the specification parameter of the render pass. The first sub-instruction may instruct to use a rendering result of a main scene render pass of the previous frame of image as the first rendering result of the to-be-rendered image. The second sub-instruction includes an original resolution parameter of the another render pass other than the main scene render pass in the first rendering instruction. Rendering is performed based on this determined third rendering instruction, and a main scene does not need to be rendered, greatly reducing an amount of rendering computation.

In this embodiment of this application, only the original resolution parameter of the target render pass is adjusted to the preset resolution parameter. During rendering based on the adjusted first rendering instruction, this reduces an amount of rendering computation when relatively ensuring rendering quality, further improves rendering efficiency to improve a frame rate of the target application, reduces heat generated by a terminal device, and reduces power consumption.

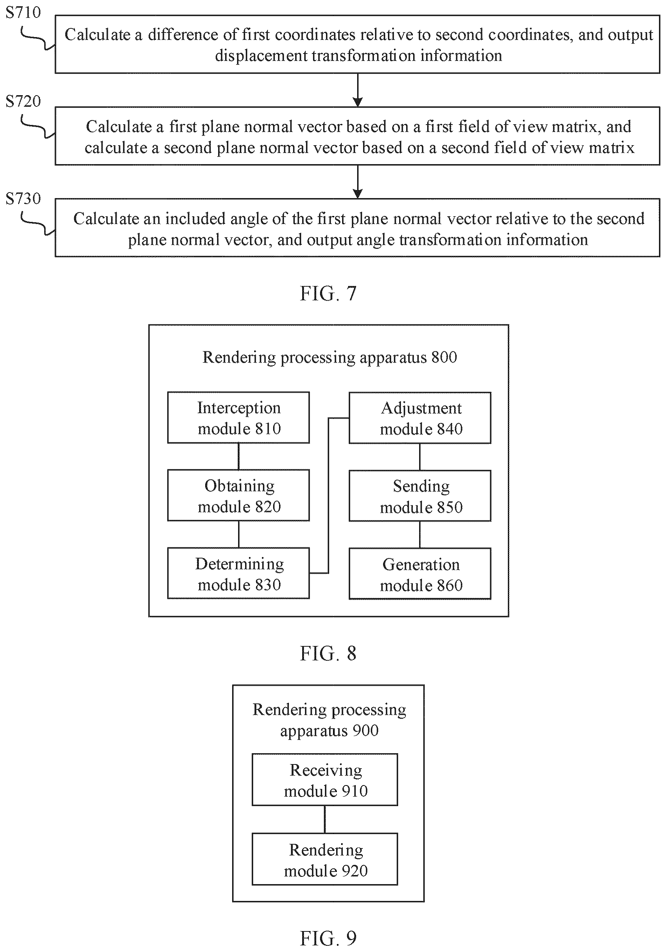

In a possible implementation, the field of view transformation information includes displacement transformation information and angle transformation information. As shown in FIG. 7, S330 (determining the field of view transformation information of the to-be-rendered image relative to the previous frame of image based on the first rendering instruction and the second rendering instruction.) may include the following steps.

S710: Calculate a difference of first coordinates relative to second coordinates, and output the displacement transformation information.

The first rendering instruction includes first coordinates of a camera, and the second rendering instruction includes second coordinates of the camera. Displacement transformation information of the camera may be obtained by calculating a difference between the first coordinates and the second coordinates.

S720: Calculate a first plane normal vector based on a first field of view matrix, and calculate a second plane normal vector based on a second field of view matrix.

The first rendering instruction includes the first field of view matrix, and the second rendering instruction includes the second field of view matrix. Based on a field of view matrix, a plane normal vector of the field of view matrix can be calculated. For example, the first field of view matrix is:

$$\begin{pmatrix} x' \\ y' \\ z' \\ w' \end{pmatrix} = \begin{pmatrix} x \cdot m_{11} + y \cdot m_{12} + z \cdot m_{13} + w \cdot m_{14} \\ x \cdot m_{21} + y \cdot m_{22} + z \cdot m_{23} + w \cdot m_{24} \\ x \cdot m_{31} + y \cdot m_{32} + z \cdot m_{33} + w \cdot m_{34} \\ x \cdot m_{41} + y \cdot m_{42} + z \cdot m_{43} + w \cdot m_{44} \end{pmatrix} :$$

In this case, the calculated first plane normal vector is (a, b, c), and (a, b, c) is calculated by using the following function: ax+by+cz+d=0, where

$$a = m_{41} + m_{31}$$

$$b = m_{42} + m_{32}$$

$$c = m_{43} + m_{33}$$

$$d = m_{44} + m_{34}$$

S730: Calculate an included angle of the first plane normal vector relative to the second plane normal vector, and output the angle transformation information.

After the first plane normal vector and the second plane normal vector are determined, the angle transformation information may be calculated. For example, the first plane normal vector is $\vec{A} = (a_1, b_1, c_1)$, and the second plane normal vector is $\vec{B} = (a_2, b_2, c_2)$. The angle transformation information θ may be calculated by using the following formula:

$$\vec{a} \cdot \vec{b} = |\vec{a}| \cdot |\vec{b}| \cos\theta = a_1 a_2 + b_1 b_2 + c_1 c_2$$

θ∈[0°, 180°].

After the field of view transformation information is determined, a field of view transformation scene may be determined based on the field of view transformation information. For example, a target application is a game application, a preset dynamic scene includes character walking, character running, or user field of view rotation in a game, and the preset dynamic scene includes a static scene in the game (a character does not perform large motion, for example, a character meditating scene, a character standing scene, or a character fishing scene). In this case, a specific scene of the foregoing scenes may be determined based on the field of view transformation information. For example, the following scenes may be defined based on the field of view transformation information:

Static scene: The displacement transformation information is less than a threshold 1, and the angle transformation information is less than a threshold 3.

Character walking scene: The displacement transformation information is greater than the threshold 1 and less than a threshold 2, and the angle transformation information is less than the threshold 3.

Character running scene: The displacement transformation information is greater than the threshold 2, and the angle transformation information is less than the threshold 3.

User field of view rotation scene: The angle transformation information is greater than the threshold 3.

In this embodiment of this application, the field of view transformation information can be accurately calculated, and whether a transformed scene of a camera is the preset dynamic scene or the preset static scene can be further determined based on the field of view transformation information, so that different rendering instruction adjustment strategies are performed based on the different scenes.

In an embodiment, an experiment is performed on various game apps based on the rendering processing method provided in this embodiment of this application, as shown in Table 1. It can be learned that for different game apps, performance is improved by 10% to 20% or power consumption is reduced by 10% to 20%.

Table 1

| Game app | Indicator | Conventional technology | Embodiment of this application | Benefit |
|---|---|---|---|---|
| App 1 | Frame rate | 56 | 59 | 3 frames |
| | Power consumption (per frame) | 1230 (22) | 1175 (19.9) | 9.5% |
| App 2 | Frame rate | 26 | 35 | 9 |
| | Power consumption (per frame) | 1167 (44.9) | 1262 (36.1) | 19.6% |
| App 3 | Frame rate | 50 | 56 | 6 |
| | Power consumption (per frame) | 1107 (22.1) | 1066 (19) | 14% |
| App 4 | Frame rate | 54 | 57 | 3 |
| | Power consumption (per frame) | 1557 (28.8) | 1456 (25.5) | 11.5% |

In this embodiment of this application, it is not necessary for an application and an application engine to perform code adaptation, and no specific hardware platform needs to be relied on. Based on a context transmission characteristic of a rendering instruction in a form of a data stream, a field of view transformation scene between two frames, namely, a previous frame and a next frame, is determined, and resolution of a render pass is accordingly adjusted, to reduce load of the target application and improve a frame rate of the target application. In this way, the target application can reduce power consumption of the terminal device without being perceived by the user, delay time at which a system limits a frequency and the frame rate of the target application, extend running time of the target application, and improve user experience.

The foregoing mainly describes the solutions provided in embodiments of this application from a perspective of execution logic of each step. It may be understood that, to implement the foregoing functions, each node, for example, a processor, includes a corresponding hardware structure and/or a corresponding software module for performing each function. A person skilled in the art should easily be aware that, in combination with algorithm steps of the examples described in embodiments disclosed in this specification, the methods in embodiments of this application can be implemented by hardware, software, or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of a processor, and a graphics processing unit may be obtained through division based on the foregoing method examples. For example, each functional module may be obtained through division in correspondence to each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

FIG. 8 is a diagram of a structure of a rendering processing apparatus 800. Modules in the apparatus shown in FIG. 8 have functions of implementing corresponding steps in FIG. 3 to FIG. 7, and can achieve corresponding technical effects. For beneficial effects corresponding to steps performed by the modules, refer to descriptions of the corresponding steps in FIG. 3 to FIG. 7. Details are not described again. The function may be implemented by hardware, or may be implemented by hardware executing corresponding software. The hardware or the software includes one or more modules corresponding to the functions. The rendering processing apparatus may be a terminal device, or a chip or a system-on-a-chip in the terminal device. For example, the rendering processing apparatus includes:

an interception module 810, configured to intercept a first rendering instruction sent by a target application, where the first rendering instruction is used to render a to-be-rendered image of the target application;
an obtaining module 820, configured to obtain a second rendering instruction, where the second rendering instruction is used to render a previous frame of image of the to-be-rendered image;
a determining module 830, configured to determine field of view transformation information of the to-be-rendered image relative to the previous frame of image based on the first rendering instruction and the second rendering instruction;
an adjustment module 840, configured to: when the field of view transformation information meets a preset dynamic scene, adjust an original resolution parameter of at least one render pass in the first rendering instruction to a preset resolution parameter, where the preset resolution parameter is lower than the original resolution parameter; and
a sending module 850, configured to send the adjusted first rendering instruction, where the adjusted first rendering instruction is used to render the to-be-rendered image.

In an embodiment, the apparatus further includes: a generation module 860, configured to: when the field of view transformation information meets a preset static scene, generate a third rendering instruction, where the third rendering instruction includes a first sub-instruction and a second sub-instruction, the first sub-instruction instructs to use rendering results of a part of render passes of the previous frame of image as a part of a rendering result of the to-be-rendered image, and the second sub-instruction includes an original resolution parameter of another render pass other than the part of render passes in the first rendering instruction; and the sending module 850 is further configured to send the third rendering instruction, where the third rendering instruction is used to render the to-be-rendered image.

In an embodiment, the adjustment module 840 is specifically configured to: determine a plurality of render passes in the first rendering instruction and specification parameters of the plurality of render passes, and adjust an original resolution parameter of a target render pass in the plurality of render passes to the preset resolution parameter. The specification parameter includes at least one of the following: render pass size, framebuffer attachment, and quantity of draw calls; and a specification parameter of the target render pass meets a preset specification condition.

In an embodiment, the field of view transformation information of different sizes corresponds to the different preset dynamic scenes; and the preset resolution parameters in the different preset dynamic scenes are different, or the preset resolution parameters in the different preset dynamic scenes are the same.

In an embodiment, the field of view transformation information includes displacement transformation information and angle transformation information; and the first rendering instruction includes a first field of view matrix and first coordinates, and the second rendering instruction includes a second field of view matrix and second coordinates. The determining module 830 is specifically configured to: calculate a difference of the first coordinates relative to the second coordinates, and output the displacement transformation information; calculate a first plane normal vector based on the first field of view matrix, and calculate a second plane normal vector based on the second field of view matrix; and calculate an included angle of the first plane normal vector relative to the second plane normal vector, and output the angle transformation information.

FIG. 9 is a diagram of a structure of a rendering processing apparatus 900. Modules in the apparatus shown in FIG. 9 have functions of implementing corresponding steps in FIG. 3 to FIG. 7, and can achieve corresponding technical effects. For beneficial effects corresponding to steps performed by the modules, refer to descriptions of the corresponding steps in FIG. 3 to FIG. 7. Details are not described again. The function may be implemented by hardware, or may be implemented by hardware executing corresponding software. The hardware or the software includes one or more modules corresponding to the functions. The rendering processing apparatus may be a terminal device, or a chip or a system-on-a-chip in the terminal device. For example, the rendering processing apparatus includes:

a receiving module 910, configured to receive a third rendering instruction, where

the third rendering instruction includes a first sub-instruction and a second sub-instruction, the first sub-instruction instructs to use a rendering result of at least one render pass of a previous frame of image of a to-be-rendered image of a target application as a first rendering result of the to-be-rendered image, the second sub-instruction includes an original resolution parameter of another render pass other than the at least one render pass in a first rendering instruction, and the first rendering instruction is an instruction sent by the target application and used to render the to-be-rendered image; and

a rendering module 920, configured to render the to-be-rendered image based on the third rendering instruction, to obtain a full rendering result of the to-be-rendered image.

The full rendering result includes the first rendering result and a second rendering result, and the second rendering result is obtained by rendering the to-be-rendered image by using the another render pass based on the original resolution parameter.

An embodiment of this application further provides a computer-readable storage medium. All or some of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit of the terminal apparatus according to any one of the foregoing embodiments, for example, including a data transmitting end and/or a data receiving end. For example, the computer-readable storage medium may be a hard disk or a memory of the terminal apparatus. Alternatively, the computer-readable storage medium may be an external storage device of the terminal apparatus, for example, a plug-in hard disk, a smart media card (smart media card, SMC), a secure digital (secure digital, SD) card, or a flash card (flash card) that is configured on the terminal apparatus. Further, the computer-readable storage medium may include both an internal storage unit and an external storage device of the terminal apparatus. The computer-readable storage medium is configured to store the computer program and other programs and data that are required by the terminal apparatus. The computer-readable storage medium may be further configured to temporarily store data that has been output or is to be output.

An embodiment of this application further provides computer instructions. All or some of the procedures in the foregoing method embodiments may be completed by computer instructions instructing related hardware (for example, a computer, a processor, a network device, and a terminal). The program may be stored in the foregoing computer-readable storage medium.

An embodiment of this application further provides a chip system. The chip system may include a chip, or may include a chip and another discrete component. This is not limited. The chip system includes a processor and a transceiver. All or some of procedures in the foregoing method embodiments may be completed by the chip system. For example, the chip system may be configured to implement functions performed by the processor in the foregoing method embodiments, or implement functions performed by the graphics processing unit in the foregoing method embodiments.

In a possible design, the chip system further includes a memory. The memory is configured to store program instructions and/or data. When the chip system runs, the processor executes the program instructions stored in the memory, to enable the chip system to perform the functions performed by the processor in the foregoing method embodiments, or implement the functions performed by the graphics processing unit in the foregoing method embodiments.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of an instruction or a data structure and that can be accessed by a computer, but is not limited thereto. Alternatively, the memory in embodiments of this application may be a circuit or any other apparatus that can implement a storage function, and is configured to store instructions and/or data.

Unless otherwise specified, "transmission" (transmit/transmission) in embodiments of this application means bidirectional transmission, and includes a sending action and/or a receiving action. Specifically, "transmission" in embodiments of this application includes data sending, data receiving, or data sending and receiving. That is, data transmission herein includes uplink data transmission and/or downlink data transmission. Data may include a channel and/or a signal. The uplink data transmission is uplink channel transmission and/or uplink signal transmission, and the downlink data transmission is downlink channel transmission and/or downlink signal transmission. In embodiments of this application, a "network" and a "system" express a same concept, and a communication system is a communication network.

The foregoing descriptions about implementations allow a person skilled in the art to understand that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be or may not be physically separate, and parts displayed as units may be one or more physical units, may be located in one place, or may be distributed in different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of a software functional unit and sold or used as an independent product, the integrated unit may be stored in a readable storage medium. Based on this understanding, the technical solutions in embodiments of this application essentially, or some of the technical solutions that contribute to the conventional technology, or all or some of the technical solutions may be embodied in a form of a software product. The software product is stored in a storage medium, and includes several instructions used to enable a device, which may be, for example, a single-chip microcomputer, a chip, or a processor (processor), to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A rendering processing method, comprising:

    intercepting a first rendering instruction sent by a target application, wherein the first rendering instruction is used to render a to-be-rendered image of the target application;
    obtaining a second rendering instruction, wherein the second rendering instruction is used to render a previous frame of image of the to-be-rendered image;
    determining field of view transformation information of the to-be-rendered image relative to the previous frame of image based on the first rendering instruction and the second rendering instruction;
    when the field of view transformation information meets a preset dynamic scene, adjusting an original resolution parameter of at least one render pass in the first rendering instruction to a preset resolution parameter, wherein the preset resolution parameter is lower than the original resolution parameter; and
    sending the adjusted first rendering instruction, wherein the adjusted first rendering instruction is used to render the to-be-rendered image.

2. The rendering processing method according to claim 1, wherein the method further comprises:

    when the field of view transformation information meets a preset static scene, generating a third rendering instruction, wherein the third rendering instruction comprises a first sub-instruction and a second sub-instruction, the first sub-instruction instructs to use a rendering result of at least one render pass of the previous frame of image as a first rendering result of the to-be-rendered image, and the second sub-instruction comprises an original resolution parameter of another render pass other than the at least one render pass in the first rendering instruction; and
    sending the third rendering instruction, wherein the third rendering instruction is used to render the to-be-rendered image.

3. The rendering processing method according to claim 1, wherein adjusting the original resolution parameter of the at least one render pass in the first rendering instruction to the preset resolution parameter comprises:

    determining a plurality of render passes in the first rendering instruction, and specification parameters of the plurality of render passes, wherein the specification parameter comprises at least one of the following: render pass size, framebuffer attachment, and quantity of draw calls; and
    adjusting an original resolution parameter of a target render pass in the plurality of render passes to the preset resolution parameter, wherein a specification parameter of the target render pass meets a preset specification condition.

4. The rendering processing method according to claim 1 or 3, wherein the field of view transformation information of different sizes corresponds to the different preset dynamic scenes; and the preset resolution parameters in the different preset dynamic scenes are different, or the preset resolution parameters in the different preset dynamic scenes are the same.

5. The rendering processing method according to any one of claims 1 to 4, wherein the field of view transformation information comprises displacement transformation information and angle transformation information; the first rendering instruction comprises a first field of view matrix and first coordinates, and the second rendering instruction comprises a second field of view matrix and second coordinates; and
    determining the field of view transformation information of the to-be-rendered image relative to the previous frame of image based on the first rendering instruction and the second rendering instruction comprises:

calculating a difference of the first coordinates relative to the second coordinates, and outputting the displacement transformation information;
calculating a first plane normal vector based on the first field of view matrix, and calculating a second plane normal vector based on the second field of view matrix; and
calculating an included angle of the first plane normal vector relative to the second plane normal vector, and outputting the angle transformation information.

6. A rendering processing method, comprising:

receiving a third rendering instruction, wherein the third rendering instruction comprises a first sub-instruction and a second sub-instruction, the first sub-instruction instructs to use a rendering result of at least one render pass of a previous frame of image of a to-be-rendered image of a target application as a first rendering result of the to-be-rendered image, the second sub-instruction comprises an original resolution parameter of another render pass other than the at least one render pass in a first rendering instruction, and the first rendering instruction is an instruction sent by the target application and used to render the to-be-rendered image; and
rendering the to-be-rendered image based on the third rendering instruction to obtain a full rendering result of the to-be-rendered image, wherein the full rendering result comprises the first rendering result and a second rendering result, and the second rendering result is obtained by rendering the to-be-rendered image by using the another render pass based on the original resolution parameter.

7. A rendering device, wherein the rendering device comprises a processor and a transceiver, and the processor and the transceiver are configured to support the rendering device to perform the method according to any one of claims 1 to 6.

8. A computer-readable storage medium, wherein the computer-readable storage medium stores computer instructions, and when the computer instructions are run, the method according to any one of claims 1 to 6 is performed.

FIG. 1

FIG. 2

Rendering device

Processor

Graphics processing unit

S310: Intercept a first rendering instruction sent by a target application

S320: Obtain a second rendering instruction

S330: Determine field of view transformation information of a to-be-rendered image relative to a previous frame of image based on the first rendering instruction and the second rendering instruction

S340: When the field of view transformation information meets a preset dynamic scene, adjust an original resolution parameter of at least one render pass in the first rendering instruction to a preset resolution parameter

S350: Send the adjusted first rendering instruction

FIG. 3

Rendering device

Processor

Graphics processing unit

S410: When field of view transformation information meets a preset static scene, generate a third rendering instruction

S420: Send the third rendering instruction →

S430: Render a to-be-rendered image based on the third rendering instruction, to obtain a full rendering result of the to-be-rendered image

FIG. 4

S510 — Determine a plurality of render passes in a first rendering instruction and specification parameters of the plurality of render passes

S520 — Adjust an original resolution parameter of a target render pass in the plurality of render passes to a preset resolution parameter

FIG. 5

FIG. 6

S710 | Calculate a difference of first coordinates relative to second coordinates, and output displacement transformation information

S720 | Calculate a first plane normal vector based on a first field of view matrix, and calculate a second plane normal vector based on a second field of view matrix

S730 | Calculate an included angle of the first plane normal vector relative to the second plane normal vector, and output angle transformation information

FIG. 7

Rendering processing apparatus 800

Interception module 810

Adjustment module 840

Obtaining module 820

Sending module 850

Determining module 830

Generation module 860

FIG. 8

Rendering processing apparatus 900

Receiving module 910

Rendering module 920

FIG. 9

# EP 4 664 410 A1

## INTERNATIONAL SEARCH REPORT

| International application No. |
|---|
| **PCT/CN2024/086637** |

| | |
|---|---|
| **A. CLASSIFICATION OF SUBJECT MATTER** | |
| G06T15/20(2011.01)i | |
| According to International Patent Classification (IPC) or to both national classification and IPC | |

| **B. FIELDS SEARCHED** |
|---|
| Minimum documentation searched (classification system followed by classification symbols) |
| IPC: G06T |
| Documentation searched other than minimum documentation to the extent that such documents are included in the fields searched |
| Electronic data base consulted during the international search (name of data base and, where practicable, search terms used) |
| VEN, CNABS, CNTXT, WOTXT, EPTXT, USTXT, CNKI, IEEE: 图像, 渲染, 分辨率, 高清, 低清, 复用, 上一帧, 前一帧, 动态, 变化, 变换, 历史, 场景, image, rendering, resolution, high, low, multiplexing, previous frame, dynamic, change, history, scene |

| **C. DOCUMENTS CONSIDERED TO BE RELEVANT** | | |
|---|---|---|
| Category* | Citation of document, with indication, where appropriate, of the relevant passages | Relevant to claim No. |
| X | CN 108648259 A (GUANGDONG OPPO MOBILE TELECOMMUNICATIONS CORP., LTD.) 12 October 2018 (2018-10-12)<br>description, paragraphs 0026-0066, and figures 1-8 | 1, 3-5, 7-8 |
| Y | CN 108648259 A (GUANGDONG OPPO MOBILE TELECOMMUNICATIONS CORP., LTD.) 12 October 2018 (2018-10-12)<br>description, paragraphs 0026-0066, and figures 1-8 | 2,6 |
| Y | CN 115253300 A (HUAWEI TECHNOLOGIES CO., LTD.) 01 November 2022 (2022-11-01)<br>description, paragraphs 0154-0198 | 2,6 |
| A | CN 114359451 A (PIXELWORKS SEMICONDUCTOR TECHNOLOGY (SHANGHAI) CO., LTD.) 15 April 2022 (2022-04-15)<br>entire document | 1-8 |
| A | US 2019051026 A1 (MICROSOFT TECHNOLOGY LICENSING, LLC) 14 February 2019 (2019-02-14)<br>entire document | 1-8 |

| ☐ Further documents are listed in the continuation of Box C. | ☑ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 June 2024** | **21 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

21

**INTERNATIONAL SEARCH REPORT**
Information on patent family members

International application No.

**PCT/CN2024/086637**

| Patent document cited in search report | | | Publication date (day/month/year) | Patent family member(s) | | | Publication date (day/month/year) |
|---|---|---|---|---|---|---|---|
| CN | 108648259 | A | 12 October 2018 | None | | | |
| CN | 115253300 | A | 01 November 2022 | None | | | |
| CN | 114359451 | A | 15 April 2022 | US | 2022101504 | A1 | 31 March 2022 |
| US | 2019051026 | A1 | 14 February 2019 | WO | 2019032192 | A1 | 14 February 2019 |
| | | | | EP | 3665654 | A1 | 17 June 2020 |

Form PCT/ISA/210 (patent family annex) (July 2022)

**EP 4 664 410 A1**

**REFERENCES CITED IN THE DESCRIPTION**

**Patent documents cited in the description**

- CN 202311114943
- CN 202311131841